# EUROPÄISCHE PATENTANMELDUNG

(11) **EP 3 339 704 A1**
(43) Veröffentlichungstag der Anmeldung: **27.06.2018**
(21) Anmeldenummer: 17208403.0
(22) Anmeldetag: 19.12.2017
(51) Int. Cl.: F16L 9/12, F16L 21/035

(54) **VERFAHREN ZUR HERSTELLUNG EINER ROHRVERBINDUNG SOWIE ROHR ZUR VERWENDUNG IN EINEM DERARTIGEN VERFAHREN**

(30) Priorität: 22.12.2016 DE 102016125325
(71) Anmelder: REHAU AG + Co, 95111 Rehau (DE)
(72) Erfinder: Beugel, Peter, 91301 Forchheim (DE)

(57) **Zusammenfassung**

Die vorliegende Erfindung bezieht sich auf ein Verfahren zur Herstellung einer Rohrverbindung (6) zwischen einem Rohr (1) mit mindestens einem Spitzende (3) und einem Rohr (1') oder einem Rohrformteil mit mindestens einem Muffenende (2'), wobei das Rohr (1) mit dem mindestens einen Spitzende (3) beabstandet von dem Spitzende (3) an seiner Außenoberfläche (4) eine Längenmarkierung (5) aufweist und wobei das Verfahren die folgenden Stufen umfasst:
(a) Einführen des Spitzendes (3) des Rohres (1) in das Muffenende (2') des Rohres (1') oder des Rohrformteils zumindest soweit, bis die Längenmarkierung (5) des Rohres (1) aufgrund des Verdecktseins durch das Muffenende (2') des Rohres (1') oder des Rohrformteils von außen nicht mehr zu erkennen ist; und
(b) Herausziehen des Spitzendes (3) des Rohres (1) aus dem Muffenende (2') des Rohres (1') zumindest soweit, bis die Längenmarkierung (5) des Rohres (1) nicht durch das Muffenende (2') des Rohres (1') oder des Rohrformteils verdeckt ist.

Darüber hinaus bezieht sich die vorliegende Erfindung auch auf ein Verfahren zur Herstellung einer Rohrverbindung (6) zwischen einem Rohr (1) mit mindestens einem Spitzende (2) und einem Rohr (1') oder einem Rohrformteil mit mindestens einem Muffenende (2'), wobei das Rohr (1) mit dem mindestens einen Spitzende (3) beabstandet von dem Spitzende (3) an seiner Außenoberfläche (4) eine Längenmarkierung (5) aufweist und wobei das Verfahren die folgende Stufe umfasst:
(a) Einführen des Spitzendes (3) des Rohres (1) in das Muffenende (2') des Rohres (1') oder Rohrformteils soweit, bis die Längenmarkierung (5) des Rohres (1) gerade nicht durch das Muffenende (2') des Rohres (1') oder des Rohrformteils verdeckt wird.

Letztlich bezieht sich die vorliegende Erfindung auch auf ein Rohr (1) mit mindestens einem Spitzende (3) zur Verwendung in einem erfindungsgemäßen Verfahren, wobei das Rohr (1) mit dem mindestens einen Spitzende (3) beabstandet von dem Spitzende (3) an seiner Außenoberfläche (4) eine Längenmarkierung (5) aufweist.

## Beschreibung

Die Erfindung betrifft ein Verfahren zur Herstellung einer Rohrverbindung zwischen einem Rohr mit mindestens einem Spitzende und einem Rohr oder einem Rohrformteil mit mindestens einem Muffenende sowie ein Rohr zur Verwendung in einem derartigen Verfahren.

Derartige Verfahren zur Herstellung einer Rohrverbindung zwischen einem Rohr mit mindestens einem Spitzende und einem Rohr oder einem Rohrformteil mit mindestens einem Muffenende bzw. einer Steckmuffe sind im Stand der Technik bekannt und werden insbesondere zur Montage von Hausabflussrohren aus Kunststoff eingesetzt. Dabei wird zunächst das Spitzende eines Rohres eines Hausabflussrohrsystems ggf. nach entsprechendem Ablängen des Rohres und/oder Auftragen eines Gleitmittels bis zum Anschlag in das Muffenende eines weiteren Rohres des Hausabflussrohrsystems eingeführt. Daraufhin wird das eingeführte Rohr an seiner Oberfläche an einer Stelle senkrecht unterhalb des äußeren Randes des Muffenendes des anderen Rohres mit einer Markierung versehen. Abschließend wird das Spitzende des Rohres um etwa 0,5 cm bis 2 cm aus dem Muffenende des anderen Rohres herausgezogen. Dadurch wird gewährleistet, dass eine thermische Ausdehnung der Rohre während ihrer Verwendung in der Rohrverbindung kompensiert werden kann, ohne dass es zu einer ungewünschten Verformung der gebildeten Rohrverbindung kommt. Allerdings sind für dieses Verfahren mehrere Arbeitsschritte erfoderlich.

Dementsprechend liegt der vorliegenden Erfindung die Aufgabe zugrunde, ein Verfahren zur Herstellung einer Rohrverbindung zwischen einem Rohr mit mindestens einem Spitzende und einem Rohr oder einem Rohrformteil mit mindestens einem Muffenende zur Verfügung zu stellen, das mindestens einen der Nachteile des Stands der Technik überwindet. Insbesondere soll das erfindungsgemäße Verfahren gegenüber dem Stand der Technik einfacher durchzuführen sein. Ferner liegt die Aufgabe der vorliegenden Erfindung in der Bereitstellung eines Rohres mit einem Spitzende, das zur Verwendung in dem erfindungsgemäßen Verfahren geeignet ist.

Diese und andere Aufgaben werden erfindungsgemäß durch ein Verfahren mit den Merkmalen des Anspruchs 1 oder des Anspruchs 2 bzw. durch ein Rohr mit den Merkmalen des Anspruchs 5 gelöst. Bevorzugte Ausführungsformen der vorliegenden Erfindung sind in den abhängigen Ansprüchen beschrieben.

Dazu ist es erfindungsgemäß vorgesehen, an dem Rohr mit dem mindestens einen Spitzende beabstandet von dem Spitzende an seiner Außenoberfläche eine Längenmarkierung vorzusehen, wobei der Abstand zwischen dem Spitzende und der Längenmarkierung vorzugsweise in einem Bereich von 5 mm bis 35 mm, insbesondere in einem Bereich von 8 mm bis 20 mm und besonders bevorzugt in einem Bereich von 10 mm bis 15 mm liegt. Alternativ dazu kann der Abstand zwischen dem Spitzende und der Längenmarkierung vorzugsweise so gewählt werden, dass dieser Abstand ungefähr der Länge der thermischen Ausdehnung entsprecht, die das Rohr mit dem Spitzende bei einer Temperaturerhöhung von 15°C auf 40°C erfährt. Der Abstand zwischen dem Spitzende und der Längenmarkierung ist dann von der Länge des Rohres mit dem Spitzende abhängig und beträgt insbesondere etwa 0,5 cm bis 2,5 cm.

Zur Montage der Rohre gibt es erfindungsgemäß zwei Möglichkeiten. Zum einen kann das Spitzende des einen Rohres über die vorher aufgebrachte, insbesondere werkseitig aufgedruckte, Längenmarkierung hinaus in das Muffenende eines anderen Rohres oder eines Rohrformteils eingeführt werden. Die Längenmarkierung ist dann nicht mehr von außen zuerkennen. Daraufhin wird das Spitzende des einen Rohres wieder aus dem Muffenende des anderen Rohres oder des Rohrformteils zumindest soweit herausgezogen, bis das Muffenende des Rohres oder des Rohrformteils die Längenmarkierung gerade nicht mehr verdeckt. Alternativ kann die Rohrverbindung zwischen dem Rohr mit dem Spitzende und dem Rohr oder dem Rohrformteil mit dem Muffenende erfindungsgemäß auch dadurch erzeugt werden, dass das Spitzende des Rohres in das Muffenende des Rohres oder Rohrformteils nur soweit eingeführt wird, bis die Längenmarkierung des Rohres gerade nicht durch das Muffenende des Rohres oder des Rohrformteils verdeckt ist. Bei beiden alternativen des erfindungsgemäßen Herstellungsverfahren ist gewährleistet, dass das Spitzende in der erfindungsgemäß hergestellten Rohrverbindung einen ausreichenden Spielraum in dem Muffenende des anderen Rohres oder Rohrformteils besitzt, so dass durch Temperaturänderungen hervorgerufene Längenausdehnungen der Rohre während des Betriebs kompensiert werden können, ohne dass es zu ungewollten Verformungen oder Brüchen der Rohrverbindung kommt.

Dementsprechend liegt die vorliegende Erfindung in der Bereitstellung eines Verfahrens zur Herstellung einer Rohrverbindung zwischen einem Rohr mit mindestens einem Spitzende und einem Rohr oder einem Rohrformteil mit mindestens einem Muffenende, wobei das Rohr mit dem mindestens einen Spitzende beabstandet von dem Spitzende an seiner Außenoberfläche eine Längenmarkierung aufweist und das Verfahren die Stufen (a) des Einführens des Spitzendes des Rohres in das Muffenende des Rohres oder des Rohrformteils zumindest soweit, bis die Längenmarkierung an dem Rohr mit dem Spitzende aufgrund des Verdecktseins durch das Muffenende des Rohres oder des Rohrformteils mit dem Muffende von außen nicht mehr zu erkennen ist; und (b) des Herausziehens des Spitzendes des Rohres mit dem Spitzende aus dem Muffenende des Rohres des Rohrformteils mit dem Muffende zumindest soweit, bis die Längenmarkierung nicht durch das Muffenende des Rohres oder des Rohrformteils verdeckt ist, umfasst. Darüber hinaus liegt die vorliegende Erfindung auch in der Bereitstellung eines Verfahrens zur Herstellung einer Rohrverbindung zwischen einem Rohr mit mindestens einem Spitzende und einem Rohr oder einem Rohrformteil mit mindestens einem Muffenende, wobei das Rohr mit dem mindestens einen Spitzende beabstandet von dem Spitzende an seiner Außenoberfläche eine Längenmarkierung aufweist und wobei das Verfahren die Stufe des Einführens des Spitzendes des Rohres in das Muffenende des Rohres oder Rohrformteils soweit, bis die Längenmarkierung des Rohres gerade nicht durch das Muffenende des Rohres oder des Rohrformteils verdeckt ist, umfasst. Letztlich stellt die vorliegende Erfindung auch ein Rohr mit mindestens einem Spitzende zur Verwendung in einem der erfindungsgemäßen Verfahren zur Verfügung, wobei das Rohr mit dem mindestens einen Spitzende beabstandet von dem Spitzende an seiner Außenoberfläche eine Längenmarkierung aufweist.

Die Beurteilung, ob die Längenmarkierung durch das Muffenende des anderen Rohres oder des Rohrformteils verdeckt wird oder nicht, erfolgt im Sinne der vorliegenden Erfindung dabei mittels einer Betrachtungsweise der Oberfläche des Rohres mit dem Spitzende senkrecht zur dessen Oberfläche über den äußeren Rand des Muffenendes des Rohres oder des Rohrformteils. Der Begriff "Rohr" umfasst hierin auch "Rohrformteile", wie zum Beispiel Abzweige, T-Stücke, Bögen oder dergleichen. Der Begriff "Stoßstelle" soll hierin den Bereich der Rohrverbindung beschreiben, an dem die Rohre aufeinander stoßen oder das eine Rohr in das andere eintritt, wenn sich die Rohre an den Enden überlappen.

Es kann sich als hilfreich erweisen, wenn das erfindungsgemäße Verfahren zusätzlich die Stufen des Auftragens eines Gleitmittels auf die Außenoberfläche des Rohres mit mindestens einem Spitzende in dem Bereich zwischen dem Spitzende und der Längenmarkierung und/oder des Ablängens, beispielsweise mittels Abschneiden oder Absägen, des Rohres mit dem mindestens einen Spitzende umfasst. Durch das Auftragen eines Gleitmittels wird das Einführen des Spitzendes des Rohres in das Muffenende des anderen Rohres oder des Rohrformteil erleichtert. Darüber hinaus wird eine Relativbewegung des Spitzendes und des Muffenendes aufgrund unterschiedlicher thermischer Ausdehnung erleichtert, was einer Schallreduzierung beim Einsatz der Rohrverbindung führt. Durch das Ablängen des Rohres mit dem mindestens einen Spitzende kann dieses Rohr auf die am Einsatzort benötigte Rohrlänge gebracht werden.

Es kann sich als nützlich erweisen, wenn der Abstand zwischen dem Spitzende und der Längenmarkierung vorzugsweise in einem Bereich von 5 mm bis 35 mm, insbesondere in einem Bereich von 8 mm bis 20 mm und besonders bevorzugt in einem Bereich von 10 mm bis 15 mm liegt. Alternativ kann der Abstand zwischen dem Spitzende und der Längenmarkierung zumindest ungefähr der Länge der thermischen Ausdehnung entsprichen, die das Rohr bei einer Temperaturerhöhung von 15°C auf 40°C erfährt. Dazu ist erfindungsgemäß vorgesehen, an dem Rohr mit dem mindestens einen Spitzende beabstandet von dem Spitzende an seiner Außenoberfläche eine Längenmarkierung vorzusehen, wobei der Abstand zwischen dem Spitzende und der Längenmarkierung vorzugsweise ungefähr der Länge der thermischen Ausdehnung entspricht, die das Rohr mit dem Spitzende bei einer Temperaturerhöhung von 15°C auf 40°C erfährt. Der Abstand zwischen dem Spitzende und der Längenmarkierung ist dabei von der Länge des Rohres mit dem Spitzende abhängig und beträgt insbesondere etwa 0,5 cm bis etwa 2,5 cm, vorzugsweise etwa 0,7 cm bis 2,0 cm und besonders bevorzugt etwa 0,9 cm bis 1,7 cm.

Es kann auch hilfreich sein, wenn die Längenmarkierung radial umlaufend mit oder ohne Unterbrechungen, als ein einziger, radial verlaufender Strich, als von einander beabstandete Striche, die in Richtung der Rohrachse verlaufen, oder ähnliches ausgebildet ist. Ebenso kann die Längenmarkierung auch dadurch ausgebildet sein, das ein Bereich vor dem äußeren Rand des Spitzendes des Rohres eine andere Färbung aufweist als der Rest des Rohres. In einem derartigen Fall bildet der dem äußeren Rand des Spitzendes abgewandte Rand dieses Bereichs die Längenmarkierung. Auch Kombinationen der genannten Längenmarkierungen sind denkbar.

Es kann sich als vorteilhaft erweisen, wenn Spitzende und Muffenende einer Rohrverbindung durch Rohrverbindungsvorrichtung, die vorzugsweise zwei insbesondere schalenartige Halteelemente umfasst, die klemmend über der Stoßstelle der Rohre bzw. des Rohres und des Rohrformteils festlegbar sind. Dadurch wird eine feste, formschlüssige Rohrverbindung erzielt. Eine derartige Rohrverbindungsvorrichtung ist beispielsweise aus der DE 20 2005 019 635 U1, auf deren Inhalt hinsichtlich Aufbau der Rohrverbindungsvorrichtung explizit Bezug genommen wird.

Bei den erfindungsgemäß eingesetzten Rohren handelt es sich bevorzugt um Kunststoffrohr zum Durchleiten von Abwässern. Insbesondere sind derartige Kunststoffrohre aus einem Grundrohr und an der Innen- und/oder Außenfläche des Grundrohres angeordneten einextrudierten bandartigen Schichten aufgebaut. Die bandartigen Schichten sind bevorzugt beabstandet voneinander angeordnet. Vorzugsweise unterscheidet sich die Dichte des Grundrohrmaterials von der Dichte des Materials der bandartigen Schichten. Derartige Kunststoffrohre zum Durchleiten von Abwässern sind aus der DE 10 2006 020 375 A1 bekannt, auf deren Inhalt hinsichtlich Aufbau, Material und Herstellung der Kunststoffrohre explizit Bezug genommen wird.

Das erfindungsgemäße Rohr sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Herstellung mittels Extrusion und Aufbringen der Längenmarkierung durch Bedrucken.

Im Folgenden soll die vorliegende Erfindung unter Bezugnahme auf die in den Figuren dargestellten Ausführungsformen im Detail erläutert werden. Dabei zeigen
- Figur 1: eine perspektivische Ansicht eines Rohrs gemäß einer Ausführungsform der vorliegenden Erfindung;
- Figur 2: eine perspektivische Ansicht einer durch das erfindungsgemäße Verfahren hergestellte Rohrverbindung unter Verwendung zweier in Fig. 1 dargestellter Rohre;
- Figur 3: eine perspektivische Ansicht eines Rohrs gemäß einer weiteren Ausführungsform der vorliegenden Erfindung;
- Figur 4: eine perspektivische Ansicht eines Rohrs gemäß einer weiteren Ausführungsform der vorliegenden Erfindung;
- Figur 5: eine perspektivische Ansicht eines Rohrs gemäß einer weiteren Ausführungsform der vorliegenden Erfindung; und
- Figur 6: eine perspektivische Ansicht eines Rohrs gemäß einer weiteren Ausführungsform der vorliegenden Erfindung.

### Detaillierte Beschreibung des bevorzugten Ausführungsbeispiels

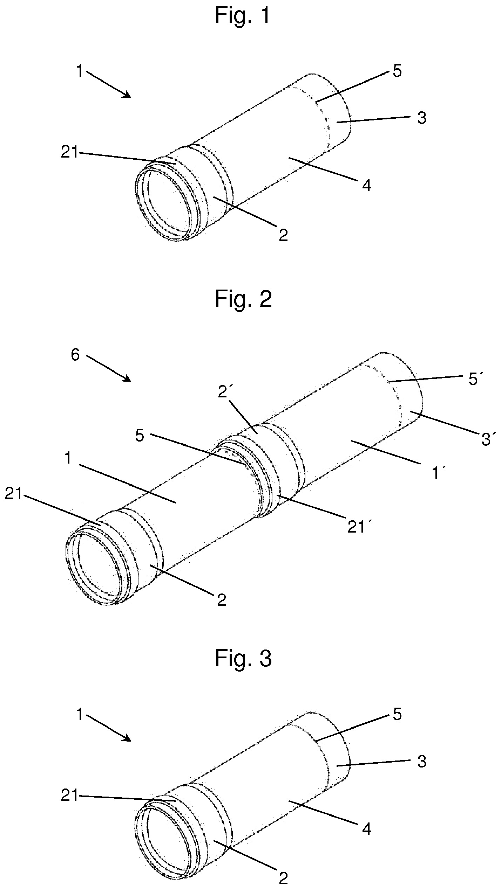

In Figur 1 ist eine Ausführungsform des erfindungsgemäßen Rohrs 1 in einer perspektivischen Darstellung gezeigt. In der in Fig. 1 gezeigten Ausführungsform ist das Rohr 1 als ein Kunststoffrohr, beispielsweise aus Polypropylen (PP), zum Durchleiten von Abwässern ausgebildet. Das Rohr 1 erstreckt sich über eine vorgegebene Länge und weist vorzugsweise einen Durchmesser von 40 bis 160 mm und eine Wandstärke von 1,8 bis 3,9 mm auf.

Das Rohr 1 umfasst zwei Enden 2, 3, von denen das eine in Bezug auf den Rohrdurchmesser aufgeweitet ist. Dieses aufgeweitete Ende wird als Muffenende 2 oder Steckmuffe bezeichnet. Das andere Ende des Rohres 1 entspricht hinsichtlich seines Durchmessers im Wesentlichen dem des Mittelteils des Rohres 1. Dieses Ende wird als Spitzende 3 des Rohres 1 bezeichnet. Vorzugsweise ist das Spitzende 3 des Rohres 1 passend zu seinem Muffenende 2 ausgebildet, so dass sich Rohrketten aus baugleichen Rohren 1 bilden lassen. Das Muffenende 2 weist eine umlaufende Sicke 21 auf, in der eine radial umlaufenden Dichtung, insbesondere ein Dichtungsring, zur Abdichtung einer Verbindung zwischen dem Muffenende 2 und dem passenden Spitzende 3 eines identischen Rohres 1 oder eines anderen Rohres oder Rohrformteils mit identischem Spitzende angeordnet werden kann.

Beabstandet von dem Spitzende 3 weist das Rohr 1 an seiner Außenoberfläche 4 eine Längenmarkierung 5 auf, die in der dargestellten Ausführungsform radial umlaufend mit Unterbrechungen ausgeführt ist. Der Abstand zwischen dem Spitzende 3 und der Längenmarkierung 5 beträgt in der Ausführungsform gemäß Fig. 1 etwa 1,5 cm, wobei Abstände im Bereich von etwa 0,5 cm bis etwa 2,5 cm, vorzugsweise etwa 0,7 cm bis 2,0 cm und besonders bevorzugt etwa 0,9 cm bis 1,7 cm ebenfalls möglich wären. Alternativ zu der radial umlaufenden Längenmarkierung 5 mit Unterbrechungen kann die Längenmarkierung 5 auch anders ausgebildet sein, beispielsweise als ein einziger Strich, radial umlaufend ohne Unterbrechungen, als von einander beabstandete Striche, die in Richtung der Rohrachse verlaufen, oder ähnliches. Ebenso kann die Längenmarkierung 5 auch dadurch ausgebildet sein, dass ein Bereich vor dem äußeren Rand des Spitzendes 3 des Rohres 1 eine andere Färbung aufweist als der Rest des Rohres 1. In einem derartigen Fall bildet der dem äußeren Rand des Spitzendes 3 abgewandte Rand dieses Bereichs die Längenmarkierung 5. Auch kann die Längenmarkierung als eine Kombination der genannten Längenmarkierungen 5 ausgebildet sein.

In Fig. 2 ist eine perspektivische Ansicht einer durch das erfindungsgemäße Verfahren hergestellten Rohrverbindung 6 unter Verwendung zweier identischer Rohre 1, 1' gemäß Fig. 1. Dabei ist das Spitzende 3 des Rohres 1 in das Muffende 2' des Rohres 1' eingeführt. Die Rohrverbindung 6 ist durch einen in den umlaufende Sicke 21' des Rohres 1' eingelegten Dichtungsring abgedichtet. Das Spitzende 3 des Rohres 1 ist in der Rohrverbindung 6 gemäß Fig. 2 gerade soweit in das Muffende 2' des Rohres 1' einschoben, dass die Längenmarkierung 5 des Rohres 1 gerade noch sichtbar ist, wenn die Stoßstelle der Rohre 1, 1' orthogonal von oben über den äußeren Rand des Muffenendes 2' des Rohres 1' betrachtet wird. In der perspektivischen Betrachtung gemäß Fig. 2 ist die Längenmarkierung 5 des Rohres 1 gut zu erkennen.

Um die Rohrverbindung 6 zu bilden, können erfindungsgemäß zwei Varianten eingesetzt werden. Bei beiden Varianten kann das Rohr 1 zunächst auf die erforderliche Länge verkürzt werden und der Bereich zwischen dem äußeren Rand des Spitzendes 3 des Rohres 1 und der Längenmarkeirung 5 kann mit einem Gleitmittel versehen werden. Gemäß der ersten Variante des erfindungsgemäßen Verfahrens wird zunächst das Spitzende 3 des Rohres 1 in das Muffenende 2' des Rohres 1' eingeführt. Dies erfolgt mindestens so weit, bis die Längenmarkierung 5 an der Außenoberfläche 4 des Rohres 1 bei einer Betrachtungsweise der Stoßstelle der Rohre 1, 1' orthogonal von oben über den äußeren Rand des Muffenendes 2' des Rohres 1' nicht mehr zu sehen ist. Dies kann auch soweit geschehen, bis das Spitzende 3 des Rohres 1 an der sich verjüngenden Innenwand des Rohres 1' anstößt. In jedem Fall ist die Längenmarkierung 5 des Rohres 1' bei der beschriebenen Betrachtungsweise von oben durch das Muffenende 2' des Rohres 1' verdeckt. Daraufhin wird das Spitzende 3 des Rohres 1 aus dem Muffenende 2' des Rohres 1' wieder herausgezogen.

Dieses Herausziehen erfolgt gerade soweit, bis die Längenmarkierung 5 des Rohres 1 bei der beschriebenen Betrachtungsweise gerade wieder erkennbar ist, also nicht mehr durch das Muffenende 2' des Rohres 1' verdeckt wird, wenn die Stoßstelle der Rohre 1, 1' orthogonal von oben über den äußeren Rand des Muffenendes 2' des Rohres 1' betrachtet wird.

Alternativ dazu kann die Rohrverbindung 6 gemäß der zweiten Variante des erfindungsgemäßen Verfahrens dadurch hergestellt werden, dass das Spitzende 3 des Rohres 1 lediglich so weit in das Muffenende 2' des Rohres 1' oder Rohrformteils eingeführt wird, bis die Längenmarkierung 5 des Rohres 1 gerade nicht durch das Muffenende 2' des Rohres 1' oder des Rohrformteils verdeckt ist, wobei die Betrachtung der Stoßstelle der Rohre 1, 1' wiederum orthogonal von oben über den äußeren Rand des Muffenendes 2' des Rohres 1' erfolgt, d.h. bei der genannten Betrachtungsweise ist die Längenmarkierung 5 des Rohres 1 gerade noch eben zu erkennen.

Abschließend kann die Rohrverbindung 6 gemäß beider Varianten des erfindungsgemäßen Verfahrens durch eine Rohrverbindungsvorrichtung fixiert werden, die vorzugsweise zwei insbesondere schalenartige Halteelemente umfasst, die klemmend über der Stoßstelle der Rohre 1, 1' festgelegt werden können, wodurch durch einen Formschluss eine feste Rohrverbindung 6 erzeugt wird.

In Fig. 3 bis Fig. 6 sind weitere Ausführungsformen des erfindungsgemäßen Rohres 1 dargestellt. Um Wiederholungen zu vermeiden, wird daher im Folgenden nur auf Unterschiede zu der in Fig. 1 dargestellten Ausführungsform des erfindungsgemäßen Rohres 1 eingegangen. Die Ausführungsformen zu Fig. 1 sowie zu der Rohrverbindung 6 gemäß Fig. 2 aus zwei Rohren 1, 1' mit zueinander passenden Spitzende 3 und Muffende 2' gelten auch für die Ausführungsformen gemäß Fig. 3 bis Fig. 6 entsprechend. Gleiche Elemente sind in den Abbildungen durch identische Bezugszeichen gekennzeichnet.

In der weiteren Ausführungsform des Rohres 1 gemäß Fig. 3 liegt der Unterschied zur der Ausführungsform gemäß Fig. 1 in der Ausgestaltung der Längenmarkierung 5, die in der Ausführungsform gemäß Fig. 3 als durchgehende umlaufende Linie ausgebildet ist. Der Abstand zwischen dem Spitzende 3 und der Längenmarkierung 5 beträgt in der Ausführungsform gemäß Fig. 3 etwa 1,7 cm.

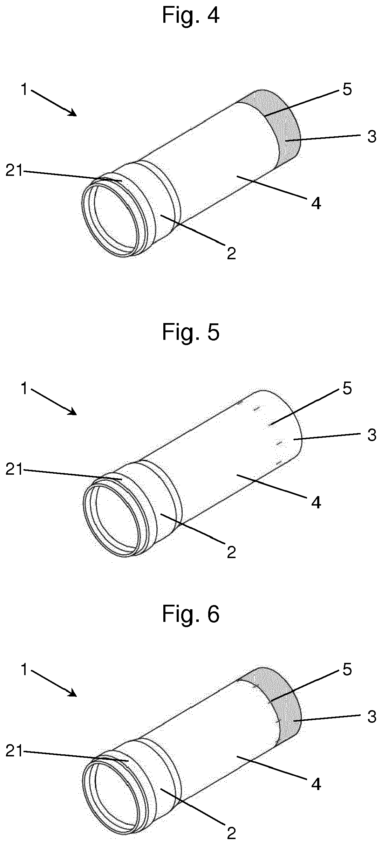

Fig. 4 zeigt eine weitere Ausführungsform des erfindungsgemäßen Rohres 1. Ein Unterschied dieser Ausführungsform zur der Ausführungsform gemäß Fig. 1 besteht auch hier darin, dass die Längenmarkierung 5 gemäß Fig. 3 wiederum als durchgehende umlaufende Linie ausgebildet ist. Darüber hinaus ist der Abschnitt des Rohres 1 zwischen der Längenmarkierung 5 und dem äußeren Rand des Spitzendes 3 farbig gegenüber dem Rest der Außenoberfläche 4 des Rohres 1 hervorgehoben. Der Abstand zwischen dem Spitzende 3 und der Längenmarkierung 5 beträgt in der Ausführungsform gemäß Fig. 4 etwa 1,8 cm.

In Fig. 5 ist eine weitere Ausführungsform des erfindungsgemäßen Rohres 1 in einer perspektivischen Darstellung gezeigt. Die in Fig. 5 dargestellte Ausführungsform unterscheidet sich von der zu Fig. 1 beschriebenen Ausführungsform darin, dass die Längenmarkierung 5 gemäß Fig. 5 in Form einer Vielzahl von in Richtung der Rohrachse verlaufender Striche ausgebildet ist, die in gleichmäßigen Abständen zueinander entlang des Umfangs auf die Außenoberfläche 4 des Rohres 1 aufgedruckt sind. Der Abstand zwischen dem Spitzende 3 und der Längenmarkierung 5 beträgt in der Ausführungsform gemäß Fig. 5 etwa 2,0 cm. Letztlich zeigt

Fig. 6 zeigt eine weitere Ausführungsform des erfindungsgemäßen Rohres 1 in einer perspektivischen Darstellung. Dabei unterscheidet sich die Ausführungsform gemäß Fig. 6 von der in Bezug auf Fig. 5 beschriebenen Ausführungsform lediglich darin, dass der Abschnitt des Rohres 1 zwischen der Längenmarkierung 5 und dem äußeren Rand des Spitzendes 3 zusätzlich farbig gegenüber dem Rest der Außenoberfläche 4 des Rohres 1 hervorgehoben ist. Die Längenmarkierung 5 gemäß Fig. 6 ist wiederum in Form einer Vielzahl von in Richtung der Rohrachse verlaufender Striche ausgebildet ist, die in gleichmäßigen Abständen zueinander entlang des Umfangs auf die Außenoberfläche 4 des Rohres 1 angeordnet sind. Der Abstand zwischen dem Spitzende 3 und der Längenmarkierung 5 beträgt in der Ausführungsform gemäß Fig. 3 wiederum etwa 1,8 cm.

Die vorliegende Erfindung wurde exemplarisch unter Bezugnahme auf die in den Figuren dargestellten Ausführungsbeispiele der vorliegenden Erfindung im Detail erläutert. Es versteht sich jedoch, dass die vorliegende Erfindung nicht auf diese Ausführungsbeispiele beschränkt ist, sondern dass sich der Umfang der vorliegenden Erfindung aus den Ansprüchen ergibt.

## Patentansprüche

1. Verfahren zur Herstellung einer Rohrverbindung (6) zwischen einem Rohr (1) mit mindestens einem Spitzende (3) und einem Rohr (1') oder einem Rohrformteil mit mindestens einem Muffenende (2'), wobei das Rohr (1) mit dem mindestens einen Spitzende (3) beabstandet von dem Spitzende (3) an seiner Außenoberfläche (4) eine Längenmarkierung (5) aufweist und wobei das Verfahren die folgenden Stufen umfasst:
(a) Einführen des Spitzendes (3) des Rohres (1) in das Muffenende (2') des Rohres (1') oder des Rohrformteils zumindest soweit, bis die Längenmarkierung (5) des Rohres (1) aufgrund des Verdecktseins durch das Muffenende (2') des Rohres (1') oder des Rohrformteils von außen nicht mehr zu erkennen ist; und
(b) Herausziehen des Spitzendes (3) des Rohres (1) aus dem Muffenende (2') des Rohres (1') zumindest soweit, bis die Längenmarkierung (5) des Rohres (1) nicht durch das Muffenende (2') des Rohres (1') oder des Rohrformteils verdeckt ist.

2. Verfahren zur Herstellung einer Rohrverbindung (6) zwischen einem Rohr (1) mit mindestens einem Spitzende (2) und einem Rohr (1') oder einem Rohrformteil mit mindestens einem Muffenende (2'), wobei das Rohr (1) mit dem mindestens einen Spitzende (3) beabstandet von dem Spitzende (3) an seiner Außenoberfläche (4) eine Längenmarkierung (5) aufweist und wobei das Verfahren die folgende Stufe umfasst:
(a) Einführen des Spitzendes (3) des Rohres (1) in das Muffenende (2') des Rohres (1') oder Rohrformteils soweit, bis die Längenmarkierung (5) des Rohres (1) gerade nicht durch das Muffenende (2') des Rohres (1') oder des Rohrformteils verdeckt wird.

3. Verfahren nach Anspruch 1 oder Anspruch 2, **dadurch gekennzeichnet, dass** das Verfahren zusätzlich die Stufen des Auftragens eines Gleitmittels auf die Außenoberfläche (4) des Rohres (1) mit dem mindestens einen Spitzende (3) in dem Bereich zwischen dem Spitzende (3) und der Längenmarkierung (5) und/oder des Ablängens des Rohres (1) mit dem mindestens einen Spitzende (3) umfasst.

4. Rohr (1) mit mindestens einem Spitzende (3) zur Verwendung in einem Verfahren ach einem der Ansprüche 1 bis 3,
**dadurch gekennzeichnet, dass**
das Rohr (1) mit dem mindestens einen Spitzende (3) beabstandet von dem Spitzende (3) an seiner Außenoberfläche (4) eine Längenmarkierung (5) aufweist.

5. Rohr nach Anspruch 4, **dadurch gekennzeichnet, dass** der Abstand zwischen dem Spitzende (3) und der Längenmarkierung (5) in einem Bereich von 5 mm bis 35 mm, insbesondere in einem Bereich von 8 mm bis 20 mm liegt.
